# EUROPÄISCHE PATENTANMELDUNG

(11) **EP 0 752 270 A2**
(43) Veröffentlichungstag der Anmeldung: **08.01.1997**
(21) Anmeldenummer: 96110674.7
(22) Anmeldetag: 02.07.1996
(51) Int. Cl.: B01J 19/24, B01J 19/00, C08F 212/08, C08F 220/12, C08F 220/44

(54) **Verfahren und Vorrichtung zur kontinuierlichen Herstellung von Polymeren**

(30) Priorität: 03.07.1995 DE 19524181
(71) Anmelder: BASF AKTIENGESELLSCHAFT, 67056 Ludwigshafen (DE)
(72) Erfinder: Fischer, Wolfgang, Dr., 67067 Ludwigshafen (DE); Baumgärtel, Michael, Dr., 67227 Frankenthal (DE)
(74) Vertreter: Isenbruck, Günter, Dr.

(57) **Zusammenfassung**

Bei einem Verfahren und einer Vorrichtung zur kontinuierlichen Herstellung von Polymeren aus Reaktionskomponenten, insbesondere von Copolymeren aus Styrol und Acrylnitril, durch Masse- bzw. Lösungspolymerisation, werden die Reaktionskomponenten durch einen Kreislaufreaktor geführt, der mindestens einen Rohrreaktor aufweist, in dem mindestens ein statisches Mischelement angeordnet ist, das von einem flüssigen Wärmeübertragungsmedium durchströmt wird. Dabei weist das statische Mischelement mehrfach gekrümmte Rohrleitungen auf.

## Beschreibung

Die Erfindung betrifft ein Verfahren und eine Vorrichtung zur kontinuierlichen Herstellung von Polymeren aus Reaktionskomponenten, insbesondere von Copolymeren aus Styrol und Acrylnitril, durch Masse- bzw. Lösungspolymerisation.

Es ist bekannt, Polymerisationen in einem Rührkessel durchzuführen. Die Reaktionswärme kann dabei entweder über die Wand oder durch Siede- oder Rückflußkühlung abgeführt werden (DE 34 30 247, DE 32 37 076, DE 25 04 659). Nachteilig insbesondere für die Copolymerisation von Styrol und Acrylnitril nach diesem Verfahren ist, daß in Gegenwart größerer Mengen an Lösungsmittel polymerisiert werden muß, da keine höherviskosen Reaktionsgemische gehandhabt werden können und die Reaktionswärme sonst nicht abgeführt werden kann. Dies führt zu niedrigeren Raum-Zeit-Ausbeuten, die aus wirtschaftlichen Gründen möglichst groß sein sollten. Die zur Verbesserung der Wärmeabfuhr und zur Handhabung hochviskoser Polymerlösungen entwickelten Rührkessel sind technisch sehr aufwendig (DD 273 265, DD 294 429) und damit sehr teuer. Des weiteren weisen Copolymerisate aus Styrol und Acrylnitril Inhomogenitäten auf, die zu Oberflächen-Störungen führen. Zur Verbesserung der Farbe der Copolymerisate aus Styrol und Acrylnitril, die für manche Anwendungen bisher nicht ausreichend ist, wurden verschiedene Maßnahmen vorgeschlagen (US 4 243 781), die jedoch besonders bei Copolymerisaten mit einem hohen Anteil an Acrylnitril nicht immer zu befriedigenden Ergebnissen führen. Dies gilt insbesondere für die Farbe der Produkte nach der Verarbeitung zu Spritzgußteilen.

In Rohrreaktoren ist es prinzipiell möglich, höhere Viskositäten zu beherrschen sowie Produkte zu erhalten, die auch nach ihrer Verarbeitung im Spritzguß einen geringen Gilb zeigen. Gleichzeitig können diese Reaktoren auch eine große spezifische Kühlfläche zur Abfuhr der Reaktionswärme besitzen. Um ein für technische Reaktoren ausreichend großes Reaktionsvolumen zu erreichen, werden die Rohrreaktoren als Rohrbündelreaktoren, gegebenenfalls als Kreislaufreaktor, konzipiert (EP 519 266). Ein großes Problem besteht darin, daß einzelne Rohre zupolymerisieren und damit das effektive Reaktionsvolumen abnimmt. Auch hat es sich herausgestellt, daß die Wärmeabfuhr trotz der großen Kühlflächen bei stark exothermen Reaktionen und hohen Umsätzen nicht ausreichend ist. Copolymerisate aus Styrol und Acrylnitril, die in diesen Reaktoren hergestellt werden, zeigen ein für manche Anwendungen zu hohen Gehalt an Inhomogenitäten auf.

Der Erfindung liegt die Aufgabe zugrunde, Copolymerisate aus Styrol und Acrylnitril in Gegenwart von möglichst geringen Mengen an Lösungsmittel herzustellen, die einen möglichst niedrigen Gehalt an Inhomogenitäten und einen geringen Gelbwert (Gilb) nach der Verarbeitung zum Beispiel im Spritzguß aufweisen.

Es wurde nun überraschend gefunden, daß die Aufgabe dadurch gelöst werden kann, daß die Reaktionskomponenten durch einen Kreislaufreaktor geführt werden, der mindestens einen Rohrreaktor aufweist, in dessen Rohr mindestens ein statisches Mischelement angeordnet ist, das von einem flüssigen Wärmeübertragungsmedium durchströmt wird.

Erfindungsgemäß wird also ein Kreislaufreaktor eingesetzt, dessen überwiegendes Reaktionsvolumen aus einem Rohrreaktor besteht, dessen Kühlung durch im Reaktor verlaufende Kühlschlangen erfolgt, die so angeordnet sind, daß gleichzeitig eine gute Durchmischung des Reaktionsgemisches erfolgt.

Entsprechende Rohrreaktoren mit Kühlschlangen werden von der Firma Sulzer unter der Bezeichnung SMR-Mischreaktoren vertrieben. Neben der Quermischung des Produktstroms wird ein hoher Wärmeübergangskoeffizient bei großer interner Wärmeaustauschfläche erzielt. Dies ermöglicht die temperaturkontrollierte Führung auch stark exothermer Reaktionen ohne die Gefahr der Bildung von Hot-Spots.

Mit dem erfindungsgemäßen Verfahren können thermoplastischer Copolymerisate hergestellt werden. Diese Copolymerisate sind aus mindestens einem vinylaromatischen Monomeren a) und mindestens einem Monomeren b) aus der Gruppe der Nitrile und Ester der (Meth)acrylsäure von Alkoholen mit 1 bis 8 C-Atomen sowie Maleinsäureanhydrid aufgebaut. Als vinylaromatische Monomere kommen in Betracht: Styrol, α-Methylstyrol und auch das para-Methylstyrol. Als bevorzugte Copolymerisate seien genannt die binären Copolymerisate aus Styrol und Acrylnitril, aus α-Methylstyrol und Acrylnitril sowie die ternären Polymerisate von α-Methylstyrol, Styrol und Acrylnitril.

Bezogen auf 100 Gew.- % des Monomerengemisches aus den Monomeren a) und b) können zusätzlich Lösungsmittel in einem Anteil von 1 bis 50 Gew.-%, bevorzugt 5 bis 25 Gew.- %, sowie bis zu 5 Gew.- % Wasser angewendet werden. Als inerte Lösungsmittel kommen unpolare Lösungsmittel, wie aromatische Kohlenwasserstoffe mit 6 bis 12 C-Atomen, insbesondere Benzol, Toluol, Ethyltoluol oder Ethylbenzol in Frage. Besonders bevorzugt wird Ethylbenzol angewendet.

Das erfindungsgemäße Verfahren kann sowohl thermisch als auch unter Verwendung der üblichen Initiatoren, z.B. von organischen Peroxiden oder organischen Azoverbindungen, die dem Fachmann bekannt sind, durchgeführt werden. Diese Starter werden in den dem Fachmann geläufigen Konzentrationen, d.h. im Bereich von 0,001 bis 0,5 Gew.-%, jeweils bezogen auf die Summe der Monomere a) und b) eingesetzt. Dem Fachmann ist bekannt, in welcher Form er diese Initiatoren (als Lösung in Monomeren oder im Lösungsmittel) in den Reaktor, in dem die Polymerisation stattfindet, kontinuierlich zudosieren kann.

Das erfindungsgemäße Verfahren wird in einem hydraulisch gefüllten Reaktor im Temperaturbereich von 50 bis 230 °C, insbesondere bei Temperaturen von 50 bis 180 °C, in einem Druckbereich von 0,1 bar bis 100 bar, insbesondere von 0,5 bis 75 bar und mit mittleren Verweilzeiten der Monomeren in der Reaktionsmasse von 20 bis 420 Minuten, insbesondere 45 bis 300 Minuten, durchgeführt. Der Reaktor, der als Kreislaufreaktor bezeichnet werden kann, besitzt als wesentliche Bestandteile mindestens einen Rohrreaktor, der innen angebrachte Einbauten in Form von durch Wärmeübertragungsmedium durchflossenen Rohrleitungen (SMR-Mischreaktor). Ferner weist der Kreislaufreaktor mindestens einen statischen Mischer auf, dessen Mischelemente aus einem Gerüst ineinandergreifender, sich kreuzender Stege bestehen, sowie mindestens einen Einsatzgemischzulauf, einen Austrag sowie mindestens eine Kreislaufpumpe. Die Viskosität des Reaktionsmediums kann bis zu 750 Pas, bevorzugt bis zu 500 Pas, betragen. Die Strömungsgeschwindigkeit im Mischreaktor kann im Bereich von 0,5 bis 20 cm/s, bevorzugt 2 bis 15 cm/s, betragen. Das Kreislaufverhältnis, definiert als der Quotient aus dem durch die Kreislaufpumpe geförderten Massenstrom und dem Massenstrom des Zulaufs, kann im Bereich von 5 bis 125, bevorzugt im Bereich von 10 bis 100, liegen.

Der Austrag aus dem Reaktor (die Austragsmenge entspricht der Zulaufmenge, da der Reaktor hydraulisch gefüllt ist) wird durch ein- oder mehrstufiges Verdampfen von flüchtigen Bestandteilen bis auf weniger als 1 Gew.-%, insbesondere weniger als 0,5 Gew.-%, bezogen auf das Polymerisat, befreit. Die abgetrennten flüchtigen Bestandteile können nach Ihrer Kondensation in den Reaktor zurückgeführt werden.

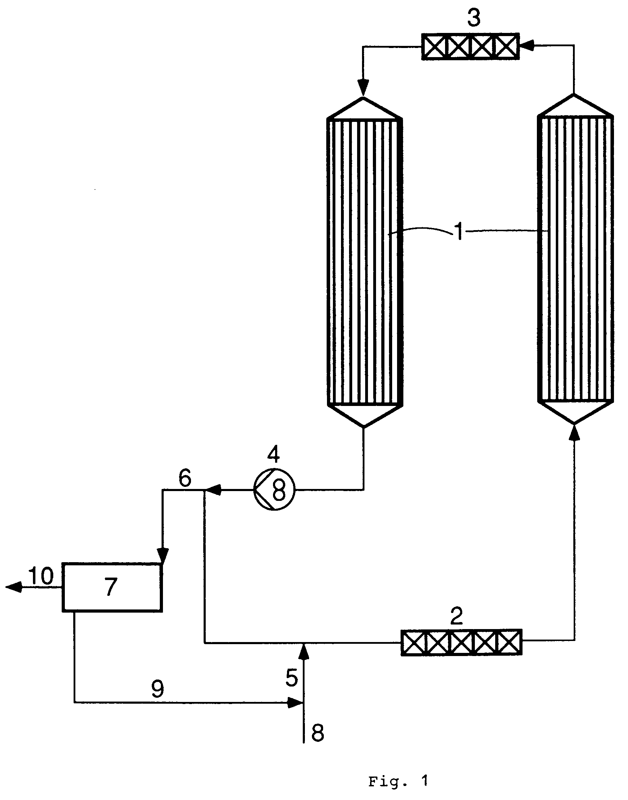

Nachfolgend ist das erfindungsgemäße Verfahren anhand von Beispielen beschrieben. Die Abbildung zeigt eine schematische Zeichnung der für die Durchführung der Versuche benutzten Apparatur.

Der Kreislaufreaktor besteht aus zwei SMR-Mischreaktoren 1 der Firma Sulzer, die mit flüssigem Wärmeträger auf Polymerisationstemperatur geheizt werden können. Während der Reaktion erfolgt die Wärmeabfuhr über den Wärmeträger. Weiterhin sind zwei statische SMX-Mischer der Firma Sulzer 2 und 3 vorgesehen, die mit den Mischreaktoren 1 verbunden sind. Außerdem gehören zum Reaktor eine Kreislaufpumpe 4, eine Einsatzgemischzufuhr 5, ein Austrag 6 sowie ein Entgasungsextruder 7. Das Volumen des gesamten Reaktors beträgt 100 l.

In den Reaktor wird über den Einsatzgemischzulauf 5 eine Mischung aus Frischmonomeren eingeleitet, die über die Leitung 8 zugeführt werden, sowie aus der Entgasung stammende flüchtige Bestandteile, die kondensiert wurden und die über die Leitung 9 rückgeführt werden. Die über die Leitung 6 ausgetragene Raktionsmasse wird dem Verdampfer-Extruder 7 zugeführt, in dem die flüchtigen Bestandteile über die Leitung 9 abgezogen werden. Das Copolymrisat aus dem Extruder 7 wird in Form von Strängen über die Leitung 10 ausgetragen, abgekühlt und granuliert.

Das Granulat wird bei 220 °C durch Spritzguß zu Prüfkörpern verarbeitet. Der Gelbwert dieser Prüfkörper wird nach DIN 6167 für Tageslicht D65/10° mittels eines Farbmeßgerätes Ultrascan der Firma Hunterlab bestimmt. Die Oberflächenqualität, die ein Maß für die Inhomogenitäten im Produkt darstellt, wird an gespritzten Prüfkästchen beurteilt. Dabei reicht die Notenskala von 2⁺ (sehr gut) bis 5 (sehr schlecht).

### Beispiel 1

Im stationären Zustand werden der Polymerisationsanlage eine Mischung aus Frischmonomeren sowie den kondensierten flüchtigen Bestandteilen aus dem Entgasungsextruder, die gegebenenfalls von unerwünschten Bestandteilen befreit wurden, zugeführt, so daß 28,4 kg/h Reaktionsmasse mit einem Feststoffgehalt von 65 Gew.-% ausgetragen werden, wobei das Copolymerisat 25 Gew.-% Acrylnitril und 75 Gew.% Styrol enthält. Der Gehalt an Ethylbenzol, bezogen auf die gesamte Reaktionsmasse im Reaktor, beträgt 14,2 Gew.-%. Das Kreislaufverhältnis beträgt 45, die Reaktionstemperatur 145 °C. Der Gelbwert beträgt 2,3, die Oberflächenqualität ist gut (2).

### Beispiel 2

Wie Beispiel 1, jedoch liegt der Gehalt an Ethylbenzol bei 10 Gew.-% bezogen auf die gesamte Reaktionsmasse im Reaktor, die Reaktionstemperatur beträgt 145 °C, der Austrag 37,5 kg/h bei einem Feststoffgehalt 67 Gew.-%, das Kreislaufverhältnis 40. Der Gelbwert beträgt 2,4, die Oberflächenqualität ist gut (2).

### Beispiel 3

Wie Beispiel 1, jedoch liegt der Gehalt an Ethylbenzol bei 13,8 Gew.-% bezogen auf die gesamte Reaktionsmasse im Reaktor, das Monomerenverhältnis im Reaktor wird so eingestellt, daß das Copolymerisat aus 33 Gew.-% Acrylnitril und 67 Gew.-% Styrol besteht, die Reaktionstemperatur beträgt 170 °C, der Austrag 41,1 kg/h bei einem Feststoffgehalt 64 Gew.-%, das Kreislaufverhältnis 45. Der Gelbwert beträgt 3,5, die Oberflächenqualität ist gut (2⁻).

### Beispiel 4

Wie Beispiel 1, jedoch liegt der Gehalt an Ethylbenzol bei 13,8 Gew.-% bezogen auf die gesamte Reaktionsmasse im Reaktor, die Reaktionstemperatur beträgt 155 °C, der Austrag 37,1 kg/h bei einem Feststoffgehalt 60 Gew.-%, das Kreislaufverhältnis 45. Der Gelbwert beträgt 3,2, die Oberflächenqualität ist befriedigend (3⁺).

### Beispiel 5

Wie Beispiel 1, jedoch liegt der Gehalt an Ethylbenzol bei 13,8 Gew.-% bezogen auf die gesamte Reaktionsmasse im Reaktor, das Monomerenverhältnis im Reaktor wird so eingestellt, daß das Copolymerisat aus 35 Gew.-% Acrylnitril und 65 Gew.-% Styrol besteht, die Reaktionstemperatur beträgt 166 °C, der Austrag 41,1 kg/h bei einem Feststoffgehalt 64 Gew.-%, das Kreislaufverhältnis 45. Der Gelbwert beträgt 4,1, die Oberflächenqualität ist gut (2⁻).

### Beispiel 6

Wie Beispiel 1, jedoch liegt der Gehalt an Ethylbenzol bei 13,8 Gew.-% bezogen auf die gesamte Reaktionsmasse im Reaktor, das Monomerenverhältnis im Reaktor wird so eingestellt, daß das Copolymerisat aus 37 Gew.-% Acrylnitril und 63 Gew.-% Styrol besteht, die Reaktionstemperatur beträgt 166 °C, der Austrag 41,1 kg/h bei einem Feststoffgehalt 65 Gew.-%, das Kreislaufverhältnis 45. Der Gelbwert beträgt 4,5, die Oberflächenqualität ist gut (2⁻).

### Beispiel 7

Wie Beispiel 1, jedoch liegt der Gehalt an Ethylbenzol bei 10 Gew.-% bezogen auf die gesamte Reaktionsmasse im Reaktor, das Monomerenverhältnis im Reaktor wird so eingestellt, daß das Copolymerisat aus 35 Gew.-% Acrylnitril und 65 Gew.-% Styrol besteht, die Reaktionstemperatur beträgt 168 °C, der Austrag 45,1kg/h bei einem Feststoffgehalt 68 Gew.-%, das Kreislaufverhältnis 45. Der Gelbwert beträgt 4,1, die Oberflächenqualität ist gut (2⁻).

### Beispiel 8

Wie Beispiel 1, jedoch liegt der Gehalt an Ethylbenzol bei 8 Gew.-% bezogen auf die gesamte Reaktionsmasse im Reaktor, das Monomerenverhältnis im Reaktor wird so eingestellt, daß das Copolymerisat aus 33 Gew.-% Acrylnitril und 67 Gew.-% Styrol besteht, die Reaktionstemperatur beträgt 171 °C, der Austrag 50,1 kg/h bei einem Feststoffgehalt 62 Gew.-%, das Kreislaufverhältnis 40. Der Gelbwert beträgt 3,9, die Oberflächenqualität ist gut (2^{**-**}).

### Vergleichsbeispiele

Die Vergleichsbeispiele werden in einem Kreislaufreaktor mit zwei Rohrbündelreaktoren, bei denen das Reaktionsgemisch durch die Rohre der Rohrbündelreaktoren fließt, durchgeführt, wie er in der DE 41 20 203 beschrieben ist. Auch in diesem Fall beträgt das Gesamtvolumen des Reaktors 100 l.

### Vergleichsbeispiel 1

Die Versuchsbedingungen sind wie in Beispiel 1 beschrieben. Der Gelbwert beträgt 2,1, die Oberflächenqualität ist gut (2⁻).

### Vergleichsbeispiel 2

Die Versuchsbedingungen sind wie in Beispiel 2 beschrieben. Der Gelbwert beträgt 2,3, die Oberflächenqualität ist befriedigend (3⁺).

### Vergleichsbeispiel 3

Die Versuchsbedingungen sind wie in Beispiel 5 beschrieben. Der Gelbwert beträgt 4,3, die Oberflächenqualität ist befriedigend (3^{**-**}).

### Vergleichsbeispiel 4

Die Versuchsbedingungen sind wie in Beispiel 7 beschrieben. Der Reaktorbetrieb wird schon wenige Stunden nach Umstellung von den Versuchsbedingungen gemaß Vergleichsbeispiel 3 auf die neuen Versuchsbedingungen instabil. Nach ca. 7 Stunden ist der Reaktor nicht mehr kontrollierbar, so daß ein Durchgehen der Reaktion nur durch schnelle Zugabe einer Lösung mit Inhibitor (Hydrochinonmonomethylether) verhindert werden kann. Es ist demnach nicht möglich, bei diesen Versuchsbedingungen den Reaktor kontinuierlich zu betreiben.

Der Vergleich der nach dem erfindungsgemäßen Verfahren mit der für dieses entwickelten Vorrichtung durchgeführten Versuchsbeispiele zeigt, daß die hier erzielten Ergebnisse insbesondere bezüglich der Oberflächenqualität erheblich besser sind als die Ergebnisse der nach dem bekannten Verfahren durchgeführten Vergleichsversuche. Auch ist es möglich, nach dem erfindungsgemäßen Verfahren Polymerisationsbedingungen einzustellen, die nach den bekannten Verfahren nicht realisierbar sind.

## Patentansprüche

1. Verfahren zur kontinuierlichen Herstellung von Polymeren aus Reaktionskomponenten, insbesondere von Copolymeren aus Styrol und Acrylnitril, durch Masse- bzw. Lösungspolymerisation, **dadurch gekennzeichnet, daß** die Reaktionskomponenten durch einen Kreislaufreaktor geführt werden, der mindestens einen Rohrreaktor aufweist, in dem mindestens ein statisches Mischelement angeordnet ist, das von einem flüssigen Wärmeübertragungsmedium durchströmt wird.

2. Verfahren nach Anspruch 1, dadurch gekennzeichnet, daß das statische Mischelement mehrfach gekrümmte Rohrleitungen aufweist.

3. Verfahren nach Anspruch 1 oder 2, dadurch gekennzeichnet, daß dem Kreislaufreaktor Gemische aus mindestens einem vinylaromatischen Monomeren und gegebenenfalls mindestens einem Monomeren aus der Gruppe der Nitrile der (Meth)acrylsäure und der Ester der (Meth)acrylsäure mit Alkoholen mit 1 bis 8 C-Atomen, sowie Maleinsäureanhydrid, zugeführt werden, wobei vorzugsweise als vinylaromatische Monomere Styrol, α-Methylstyrol und/oder para-Methylstyrol eingesetzt werden.

4. Verfahren nach einem der vorhergehenden Ansprüche, dadurch gekennzeichnet, daß bei der Lösungspolymerisation als Lösungsmittel aromatische Kohlenwasserstoffe mit 6 bis 12 C-Atomen, insbesondere Benzol, Toluol, Ethyltoluol oder Ethylbenzol eingesetzt werden, wobei vorzugsweise bezogen auf 100 Gew.-% des Monomerengemisches zusätzlich Lösungsmittel in einem Anteil von 1 bis 25 Gew.-%, bevorzugt 2 bis 18 Gew.-%, sowie bis zu 5 Gew.-% Wasser zugeführt werden.

5. Verfahren nach einem der vorhergehenden Ansprüche, dadurch gekennzeichnet, daß der Austrag aus dem Reaktor durch ein- oder mehrstufiges Verdampfen von flüchtigen Bestandteilen bis auf weniger als 1 Gew.-%, insbesondere weniger als 0,5 Gew.-%, bezogen auf das Polymerisat, befreit wird, wobei vorzugsweise die abgetrennten flüchtigen Bestandteile nach ihrer Kondensation in den Reaktor zurückgeführt werden.

6. Verfahren nach einem der vorhergehenden Ansprüche, dadurch gekennzeichnet, daß die Reaktionstemperatur im Reaktor im Bereich von 50 bis 230 °C, vorzugsweise von 50 bis 180 °C, und der Druck im Bereich von 0,1 bis 100 bar, vorzugsweise von 0,5 bis 75 bar, liegt, und/oder daß die mittlere Verweilzeit der Monomeren in der Reaktionsmasse 20 bis 420 Minuten, vorzugsweise 45 bis 300 Minuten beträgt, und/oder daß die Strömungsgeschwindigkeit des Reaktionsmediums im Rohrbündelreaktor im Bereich von 0,5 bis 20 cm/s, vorzugsweise im Bereich von 2 bis 15 cm/s, liegt, und/oder daß die Viskosität des Reaktionsmediums maximal 750 pas, vorzugsweise maximal 500 pas beträgt, und/oder daß das Massenverhältnis des im Kreislauf geförderten Massenstroms zu dem Massenstrom des Zulaufs im Bereich von 5 bis 125, vorzugsweise im Bereich von 10 bis 100 liegt.

7. Vorrichtung zur Durchführung des Verfahrens nach einem der vorhergehenden Ansprüche, dadurch gekennzeichnet, daß der Kreislaufreaktor mindestens einen Rohrreaktor (1) aufweist, in dem mindestens ein statisches Mischelement angeordnet ist, das von einem flüssigen Wärmeübertragungsmedium durchströmt ist.

8. Vorrichtung nach Anspruch 7, dadurch gekennzeichnet, daß der Rohrreaktor (1) mit mindestens einem statischen Mischer (2, 3) verbunden ist und daß mindestens ein Einsatzgemischzulauf (5) für die Zuführung der Monomere, ein Auslauf (6) für die Polymere sowie eine Kreislaufpumpe (4) vorgesehen sind, wobei vorzugsweise der Auslauf (6) mit einem Entgasungsextruder (7) verbunden ist, wobei der Entgasungsextruder (7) über einen Kondensator für flüchtige Bestandteile mit dem Einsatzgemischzulauf (5) verbunden ist.

9. Vorrichtung nach einem der Ansprüche 7 oder 8, dadurch gekennzeichnet, daß der Einsatzgemischzulauf (5) über einen statischen Mischer (2) an ein Ende eines Rohrreaktors (1) angeschlossen ist, dessen anderes Ende über einen weiteren statischen Mischer (3) mit einem Ende eines weiteren Rohrreaktors (1) in Verbindung steht, dessen anderes Ende mit dem Zulauf einer Kreislaufpumpe (4) in Verbindung steht, deren Ausgang mit dem Auslauf (6) sowie zur Bildung eines Kreislaufs mit dem Einsatzgemischzulauf (5) verbunden ist.

10. Vorrichtung nach einem der Ansprüche 7 bis 9, dadurch gekennzeichnet, daß die statischen Mischelemente in den Mischern (2, 12) aus einem Gerüst ineinandergreifender, sich kreuzender Stege aufgebaut ist.
